# EUROPÄISCHE PATENTSCHRIFT

(11) **EP 3 590 770 B1**
(45) Veröffentlichungstag und Bekanntmachung des Hinweises auf die Patenterteilung: **10.08.2022**
(21) Anmeldenummer: 19181621.4
(22) Anmeldetag: 21.06.2019
(51) Int. Cl.: B60R 16/03, H02J 1/08

(54) **VORRICHTUNG ZUM ANSTEUERN EINES ELEKTRISCHEN VERBRAUCHERS IN EINEM FAHRZEUG-BORDNETZ UND BORDNETZ EINES FAHRZEUGS**
DEVICE FOR CONTROLLING AN ELECTRICAL CONSUMER IN A VEHICLE ELECTRICAL NETWORK AND VEHICLE ELECTRICAL NETWORK
DISPOSITIF DE COMMANDE D'UN CONSOMMATEUR ÉLECTRIQUE DANS UN RÉSEAU EMBARQUÉ DE VÉHICULE ET RÉSEAU EMBARQUÉ D'UN VÉHICULE

(30) Priorität: 02.07.2018 DE 102018210844
(43) Veröffentlichungstag der Anmeldung: 08.01.2020
(73) Patentinhaber: Robert Bosch GmbH, 70442 Stuttgart (DE)
(72) Erfinder: Henkel, Achim, 70563 Stuttgart (DE); Grosse, Christian, 71640 Ludwigsburg (DE)

(56) Entgegenhaltungen:
- WO-A1-2015/082113
- DE-A1-102010 053 598
- DE-A1-102014 207 993
- JP-A- 2012 056 357
- JP-A- 2014 024 417
- US-A1- 2017 317 515
- US-B1- 8 749 193

## Beschreibung

Die vorliegende Erfindung betrifft eine Vorrichtung zum Ansteuern eines elektrischen Verbrauchers, insbesondere eines elektrischen Verbrauchers in einem Fahrzeug. Die vorliegende Erfindung betrifft ferner ein Bordnetz eines Fahrzeugs.

### Stand der Technik

Heutige Bordnetze von Fahrzeugen sind überwiegend sternförmig aufgebaut.

Dabei werden die einzelnen Motoren zentral in einem Sicherungskasten mit Sicherungen abgesichert. Bei einer solchen Topologie weist in der Regel jeder einzelne Motor eine eigene Steuerungstechnik auf.

Die Druckschrift WO 2004/064475 A2 offenbart ein Bordnetz eines Kraftfahrzeugs, bei dem die Verbraucher zu einzelnen Fahrzeugmodulen zusammengefasst sind. Mehrere Verbraucher eines Fahrzeugmoduls können mittels eines zentralen Steuergeräts über eine Busverbindung angesteuert oder geregelt werden.

Die Druckschrift US 2017/317515 A1 beschreibt eine Steuervorrichtung für eine Fahrzeugstromversorgung mit mehreren Verbraucherstromversorgungs-Steuereinheiten, die mit jeweiligen verschiedenen Verbrauchergruppen verbunden sind, und die einen Strom regeln, mit dem Verbraucher in den verbundenen Verbrauchergruppen versorgt werden.

Die Druckschrift US 8,749,193 B1 offenbart ein Fahrzeugbordnetz mit zwei elektrisch gekoppelten Schaltern zur Versorgung von Verbrauchern. Messgrößen werden an den Schaltern erfasst, in einer Steuereinheit gespeichert und mit Grenzwerten verglichen. Die Grenzwerte können sowohl von einem Designer vorbestimmt sein, als auch mittels eines, von einem Designer ausgewählten, Algorithmus aus den historischen abgespeicherten Werten ermittelt werden.

Die Druckschrift JP 2014-024417 A beschreibt ein Steuergerät für eine Fahrzeugstromquelle, das elektrische Verbraucher mit Strom versorgen kann, die auch dann betrieben werden sollen, wenn sich der Zustand eines Fahrzeugs ändert.

### Offenbarung der Erfindung

Die vorliegende Erfindung betrifft eine Vorrichtung zum Ansteuern eines elektrischen Verbrauchers mit den Merkmalen der unabhängigen Patentansprüche.

### Gemäß einem Aspekt ist vorgesehen:

Vorrichtung zum Ansteuern eines elektrischen Verbrauchers in einem Fahrzeug-Bordnetz, mit:
einer ersten Schalteinrichtung, mit einem Eingangsanschluss und einer ersten Anzahl von Ausgangsanschlüssen; und
einer zweiten Schalteinrichtung, mit einer zweiten Anzahl von Eingangsanschlüssen und einer dritten Anzahl von Ausgangsanschlüssen, wobei der Eingangsanschluss der ersten Schalteinrichtung dazu ausgelegt ist, mit einer elektrischen Energiequelle gekoppelt zu werden, und die erste Schalteinrichtung mehrere erste Schaltelemente umfasst, die zwischen dem Eingangsanschluss und jeweils einem Ausgangsanschluss der ersten Schalteinrichtung angeordnet sind; und wobei mindestens ein Ausgangsanschluss der ersten Schalteinrichtung mit einem Eingangsanschluss der zweiten Schalteinrichtung elektrisch gekoppelt ist, die zweite Schalteinrichtung mehrere zweite Schaltelemente umfasst, die jeweils zwischen einem Eingangsanschluss und einem Ausgangsanschluss der zweiten Schalteinrichtung angeordnet sind, und die Ausgangsanschlüsse der zweiten Schalteinrichtung dazu ausgelegt sind, jeweils mit einem elektrischen Verbraucher gekoppelt zu werden wobei die erste Schalteinrichtung und/oder die zweite Schalteinrichtung eine Sensoreinrichtung und einen Speicher umfasst, wobei die Sensoreinrichtung dazu ausgelegt ist, eine charakteristische elektrische Größe eines angeschlossenen elektrischen Verbrauchers zu erfassen, in dem Speicher zu speichern und frühere erfasste charakteristische Größen mit aktuellen erfassten charakteristischen Größen zu vergleichen.

### Ferner ist vorgesehen:

Ein Bordnetz für ein Fahrzeug mit einer Vorrichtung nach einem der Ansprüche 1 bis 8, sowie einer elektrischen Energiequelle und mehreren elektrischen Verbrauchern. Die elektrische Energiequelle ist mit dem Eingangsanschluss der ersten Schalteinrichtung elektrisch gekoppelt. Die mehreren elektrischen Verbraucher sind jeweils mit einem Ausgangsanschluss der zweiten Schalteinrichtung elektrisch gekoppelt.

### Vorteile der Erfindung

Der vorliegenden Erfindung liegt die Erkenntnis zugrunde, dass mit der kontinuierlich zunehmenden Anzahl von elektrischen Verbrauchern in einem Fahrzeug, wie zum Beispiel Elektromotoren zum automatischen Verstellen diverser Einrichtungselemente eines Fahrzeugs, der Aufwand für die Verkabelung und auch für die Absicherung der jeweiligen Verbraucher signifikant ansteigt. Darüber hinaus erfordert die individuelle Ansteuerelektronik für jeden einzelnen Motor auch einen großen Bauteilbedarf und somit hohe Kosten.

Es ist daher eine Idee der vorliegenden Erfindung, die Spannungsversorgung und auch die Ansteuerung der zahlreichen elektrischen Verbraucher in einem Fahrzeug mittels mehrerer hierarchisch angeordneter Schalteinrichtungen zu realisieren. Dabei können die einzelnen Schalteinrichtungen der hierarchischen Struktur als eine Art Multiplexer ausgeführt werden, so dass jeweils von einem Eingang der jeweiligen Schalteinrichtung mehrere Verbraucher versorgt und angesteuert werden können. Hierdurch kann der Schaltungsaufwand für die Ansteuerung von einer großen Anzahl von elektrischen Verbrauchern deutlich reduziert werden.

Durch die hierarchische Anordnung mehrerer hintereinander geschalteter Schalteinrichtungen ist es darüber hinaus auch möglich, ein sicheres Abschalten eines Verbrauchers zu realisieren, selbst wenn in einer der Schalteinrichtungen ein Fehler auftritt, der ein Abschalten verhindern oder erschweren würde. Auf diese Weise kann die Sicherheit des Betriebs der elektrischen Verbraucher in dem Fahrzeug-Bordnetz gesteigert werden.

Die einzelnen hierarchisch angeordneten Schalteinrichtungen können je nach Anwendungsfall zahlreiche unterschiedliche Konfigurationen aufweisen. Auf diese Weise ist eine flexible Anpassung der Energieversorgung und des Ansteuerns der Verbraucher in dem Fahrzeug-Bordnetz möglich.

Gemäß einer Ausführungsform sind die erste Schalteinrichtung und/oder die zweite Schalteinrichtung dazu ausgelegt, einen Eingangsanschluss jeweils abwechselnd mit einem Ausgangsanschluss aus einer Gruppe von mehreren Ausgangsanschlüssen der jeweiligen Schalteinrichtung elektrisch zu koppeln. Durch das alternative Ansteuern eines elektrischen Verbrauchers an jeweils höchstens einem Ausgangsanschluss ist dabei eine Begrenzung oder Minimierung des maximalen Leistungsbedarfs durch die angeschlossenen Verbraucher möglich. Eine an einem Eingang zur Verfügung stehende maximale elektrische Leistung kann somit gezielt auf mehrere elektrische Verbraucher verteilt werden, ohne dabei den Eingangsanschluss bzw. eine an dem Eingangsanschluss angeschlossene Energiequelle zu überlasten. Eine solche Konfiguration einer Schalteinrichtung entspricht einem Multiplexerbetrieb, bei dem der Eingang jeweils genau einem Ausgang aus einer Gruppe von mehreren Ausgängen aufgeschaltet wird.

Gemäß einer alternativen Ausführungsform sind die erste Schalteinrichtung und/oder die zweite Schalteinrichtung dazu ausgelegt, einen Eingangsanschluss gleichzeitig mit mehreren Ausgangsanschlüssen elektrisch zu koppeln. Auf diese Weise kann eine an dem Eingangsanschluss angelegte elektrische Spannung oder ein am Eingangsanschluss bereitgestellter Signalverlauf gleichzeitig mehreren elektrischen Verbrauchern bereitgestellt werden, so dass die mehreren elektrischen Verbraucher gemeinsam angesteuert werden können.

Gemäß einer Ausführungsform ist jeder Eingangsanschluss der zweiten Schalteinrichtung mit einem Ausgangsanschluss der ersten Schalteinrichtung elektrisch gekoppelt. Insbesondere kann die zweite Anzahl der Eingangsanschlüsse der zweiten Schalteinrichtung der ersten Anzahl der Ausgangsanschlüsse der ersten Schalteinrichtung entsprechen. Darüber hinaus ist es auch möglich, dass mehrere zweite Schalteinrichtungen gemeinsam an einer ersten Schalteinrichtung angeschlossen werden. In diesem Fall verfügt die erste Schalteinrichtung über mehr Ausgangsanschlüsse als Eingangsanschlüsse an einer der zweiten Schalteinrichtungen vorhanden sind.

Gemäß einer Ausführungsform umfasst die erste Schalteinrichtung oder die zweite Schalteinrichtung einen Gleichspannungswandler. Insbesondere kann die jeweilige Schalteinrichtung zum Beispiel einen Tiefsetzsteller (stepdown converter) umfassen. Hierzu können neben den Schaltelementen in der jeweiligen Schalteinrichtung weitere Bauelemente, wie zum Beispiel Induktivitäten, Spannungsteiler oder ähnliches vorgesehen sein.

Gemäß einer Ausführungsform umfasst die erste Schalteinrichtung eine Steuerschaltung für einen Elektromotor. Beispielsweise kann die erste Schalteinrichtung eine pulsbreitenmodulierte Ansteuerung eines Elektromotors realisieren, indem die Schaltelemente der ersten Schalteinrichtung mit einem vorgegebenen Tastverhältnis angesteuert werden. Darüber hinaus ist es zum Beispiel auch möglich, durch eine entsprechende Schaltungskonfiguration, beispielsweise eine B6-Brücke oder ähnliches eine am Eingangsanschluss bereitgestellte Gleichspannung in eine Wechselspannung zu konvertieren.

Die erste Schalteinrichtung und/oder die zweite Schalteinrichtung umfasst eine Sensoreinrichtung. Die Sensoreinrichtung kann dazu ausgelegt sein, eine charakteristische elektrische Größe in einem angeschlossenen elektrischen Verbraucher zu erfassen. Beispielsweise kann die Sensoreinrichtung einen elektrischen Strom zu dem angeschlossenen Verbraucher erfassen. Ferner ist es auch möglich, eine Leistungsaufnahme eines angeschlossenen elektrischen Verbrauchers durch die Sensoreinrichtung zu ermitteln. Selbstverständlich ist auch die Erfassung beliebiger weiterer elektrischer Größen, wie zum Beispiel Spannung, Leistungsfaktor oder ähnliches möglich.

Die erfassten charakteristischen elektrischen Größen können in einem internen oder externen Speicher gespeichert werden. Auf diese Weise können beispielsweise frühere erfasste charakteristische Größen mit aktuellen erfassten charakteristischen Größen verglichen werden. Dies ermöglicht zum Beispiel eine Analyse des angeschlossenen elektrischen Verbrauchers. Auf diese Weise können beispielsweise Alterungseffekte oder mögliche Fehler in einem angeschlossenen elektrischen Verbraucher identifiziert werden. Insbesondere ist es auch möglich, bei der Detektion von vorbestimmten Grenzwerten, beispielsweise beim Überschreiten einer vorgegebenen Schwelle für den elektrischen Strom oder die elektrische Leistung einen angeschlossenen elektrischen Verbraucher zu deaktivieren, das heißt abzuschalten. Der Schwellwert kann zum Beispiel unter Verwendung der zuvor ermittelten und gespeicherten charakteristischen Größen ermittelt werden.

Gemäß einer Ausführungsform sind die erste Schalteinrichtung und die zweite Schalteinrichtung jeweils dazu ausgelegt, sowohl einen Hinleiter als auch einen Rückleiter der Energiequelle zu den elektrischen Verbrauchern zu schalten. Beispielsweise können bei einer Gleichspannungsquelle sowohl die positive als auch die negative Versorgungsleitung separat geschaltet werden. Analog können auch bei Wechselspannungsquellen jeweils sämtliche Phasenleitungen der Wechselspannungsquelle separat geschaltet werden.

Gemäß einer alternativen Ausführungsform sind die erste Schalteinrichtung und die zweite Schalteinrichtung jeweils dazu ausgelegt, nur einen Leiter der Energiequelle zu den elektrischen Verbrauchern zu schalten. Darüber hinaus kann die Vorrichtung eine gemeinsame Massenrückführung umfassen. Auf diese Weise kann der Aufwand für die erforderlichen Schaltelemente in den Schalteinrichtungen minimiert werden.

Bei den Schaltelementen der ersten und der zweiten Schalteinrichtung kann es sich beispielsweise um Schaltelemente auf Basis von Halbleiterschaltern, wie zum Beispiel Transistoren, insbesondere MOSFET oder bipolare Transistoren mit einem isolierten Gateanschluss (IGBT) handeln. Darüber hinaus sind jedoch auch mechanische Schaltelemente möglich. Insbesondere können sich die Schaltelemente der ersten Schalteinrichtung auch von den Schaltelementen in der zweiten Schalteinrichtung unterscheiden.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der vorliegenden Erfindung werden nachfolgend anhand der Figuren erläutert. Dabei zeigen:
- Figur 1:: eine schematische Darstellung eines Blockschaltbilds einer Vorrichtung zum Ansteuern elektrischer Verbraucher gemäß einer Ausführungsform;
- Figur 2:: eine schematische Darstellung eines Blockschaltbilds einer Vorrichtung zum Ansteuern elektrischer Verbraucher gemäß einer weiteren Ausführungsform;
- Figur 3:: eine schematische Darstellung eines Blockschaltbilds einer Vorrichtung zum Ansteuern elektrischer Verbraucher gemäß noch einer weiteren Ausführungsform; und
- Figur 4:: eine schematische Darstellung eines Blockschaltbilds einer Vorrichtung zum Ansteuern elektrischer Verbraucher gemäß einer weiteren Ausführungsform.

### Ausführungsformen der Erfindung

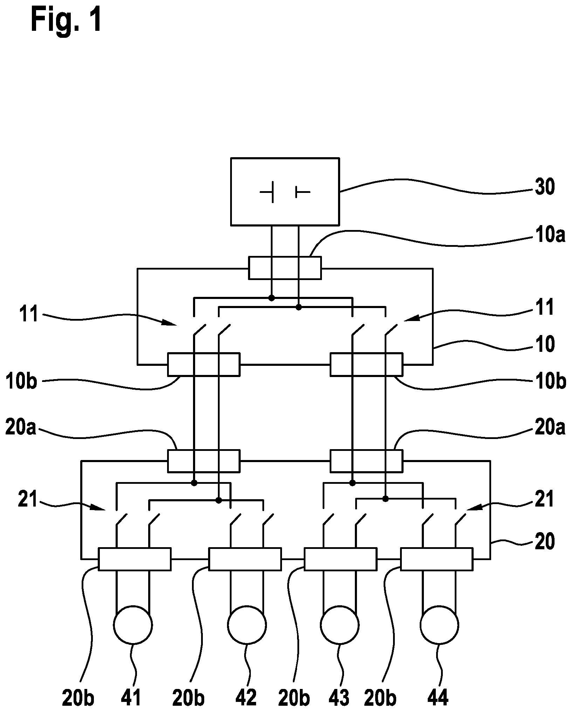

Figur 1 zeigt eine schematische Darstellung eines Blockschaltbilds einer Vorrichtung 1 zum Ansteuern elektrischer Verbraucher 41 bis 44. Die Vorrichtung 1 umfasst eine erste Schalteinrichtung 10 und eine zweite Schalteinrichtung 20. An einem Eingang 10a der ersten Schalteinrichtung 10 kann eine elektrische Energiequelle 30 angeschlossen sein. Bei dieser elektrischen Energiequelle 30 kann es sich beispielsweise um ein Niedervolt-Bordnetz eines Fahrzeugs handeln. Das Niedervolt-Bordnetz 30 des Fahrzeugs kann beispielsweise eine elektrische Spannung von 12 Volt, 24 Volt oder 48 Volt aufweisen. Selbstverständlich sind darüber hinaus auch von den zuvor genannten Spannungen abweichende Werte möglich. Weiterhin ist es grundsätzlich auch möglich, am Eingang 10a der ersten Schalteinrichtung 10 eine Wechselspannung bereitzustellen.

Die Schalteinrichtung 10 weist darüber hinaus eine erste Anzahl von einem oder mehreren Ausgangsanschlüssen 10b auf. Zwischen dem Eingangsanschluss 10a und den Ausgangsanschlüssen 10b sind jeweils Schaltelemente 11 vorgesehen. Bei den Schaltelementen 11 kann es sich beispielsweise um Halbleiterschaltelemente oder aber auch um mechanische Schaltelemente handeln. Insbesondere sind beispielsweise MOSFET oder IGBT als Halbleiterschaltelemente möglich. Die Schaltelemente 11 können dabei beispielsweise eine elektrische Verbindung zwischen dem Eingangsanschluss 10a und einem Ausgangsanschluss 10b verbinden oder trennen. Insbesondere ist es beispielsweise möglich, dass ein Anschluss des Eingangsanschlusses 10a gleichzeitig mit maximal einem Anschluss des Ausgangsanschluss 10b elektrisch verbunden wird. Auf diese Weise können zum Beispiel abwechselnd mehrere Ausgangsanschlüsse 10b mit dem Eingangsanschluss 10a elektrisch gekoppelt werden.

Darüber hinaus ist es jedoch auch grundsätzlich möglich, dass gleichzeitig mehrere oder gegebenenfalls sogar alle Ausgangsanschlüsse 10b mit dem Eingangsanschluss 10a elektrisch gekoppelt werden. Es versteht sich dabei, dass bei einem Anschluss einer positiven und einer negativen Versorgungsspannung von der elektrischen Energiequelle 30 jeweils die positiven Anschlusspunkte des Eingangsanschluss 10a nur mit positiven Anschlusspunkten der Ausgangsanschlüsse 10b verbunden werden, und analog auch der negative Anschluss am Eingangsanschluss 10a nur mit negativen Anschlüssen der Ausgangsanschlüsse 10b elektrisch verbunden werden.

Darüber hinaus umfasst die Vorrichtung 1 zum Ansteuern elektrischer Verbraucher ferner eine zweite Schalteinrichtung 20. Die zweite Schalteinrichtung 20 weist mehrere Eingangsanschlüsse 20a und mehrere Ausgangsanschlüsse 20b auf. Die Eingangsanschlüsse 20a der zweiten Schalteinrichtung sind mit den Ausgangsanschlüssen 10b der ersten Schalteinrichtung 10 elektrisch verbunden. In dem hier dargestellten Ausführungsbeispiel weist die erste Schalteinrichtung 10 die gleiche Anzahl von Ausgangsanschlüssen 10b auf, wie die zweite Schalteinrichtung 20 Eingangsanschlüsse 20a aufweist. Somit ist jeder Ausgangsanschluss 10b der ersten Schalteinrichtung 10 mit einem Eingangsanschluss 20a der zweiten Schalteinrichtung 20 verbunden. Darüber hinaus ist es auch grundsätzlich möglich, dass die erste Schalteinrichtung 10 mehr Ausgangsanschlüsse 10a aufweist, als Eingangsanschlüsse 20a an der zweiten Schalteinrichtung 20 vorhanden sind. In diesem Fall können zum Beispiel auch mehrere zweite Schalteinrichtungen 20 mit einer ersten Schalteinrichtung 10 gekoppelt werden. Auch ist es grundsätzlich nicht erforderlich, dass sämtliche Eingangsanschlüsse 20a an der zweiten Schalteinrichtung 20 mit einem Ausgangsanschluss 10b der ersten Schalteinrichtung 10 elektrisch verbunden werden.

Ferner stellt die Konfiguration gemäß der hier und in den nachfolgenden Figuren beschriebenen ersten und zweiten Schalteinrichtung 10, 20 mit einem Eingangsanschluss 10a und zwei Ausgangsanschlüssen 10b der ersten Schalteinrichtung, sowie zwei Eingangsanschlüssen 20a und vier Ausgangsanschlüssen 20b der zweiten Schalteinrichtung 20 sowie daran vier angeschlossenen Verbrauchern 41 bis 44 nur eine beispielhafte Ausführungsform dar. Darüber hinaus sind selbstverständlich beliebige andere Konfigurationen mit mehr oder weniger Eingangs- bzw. Ausgangsanschlüssen sowie Verbrauchern möglich.

Analog zu der ersten Schalteinrichtung 10 umfasst auch die zweite Schalteinrichtung 20 Schaltelemente 21, die elektrische Verbindungen zwischen den Eingangsanschlüssen 20a und den Ausgangsanschlüssen 20b der zweiten Schalteinrichtung 20 verbinden oder trennen können. Auch hierbei sind je nach Konfiguration entweder abwechselnde Verbindungen zu maximal einem Ausgangsanschluss 20b oder auch gleichzeitiges Verbinden eines Eingangsanschlusses 20a mit mehreren Ausgangsanschlüssen 20b möglich.

Durch die zuvor beschriebene Konfiguration ist es nun möglich, elektrische Energie von der elektrischen Energiequelle 30 über die erste Schalteinrichtung 10 und die zweite Schalteinrichtung 20 zu den an den Ausgangsanschlüssen 20b der zweiten Schalteinrichtung 20 angeschlossenen elektrischen Verbrauchern 41 bis 44 bereitzustellen. Bei den elektrischen Verbrauchern 41-44 kann es sich beispielsweise um Elektromotoren, Lampen oder ähnliches handeln. Insbesondere sind beispielsweise Elektromotore für das Verstellen der Sitze in einem Fahrzeug, für elektrische Fensterheber, ein elektrisches Öffnen oder Schließen von Fahrzeugtüren, das Einstellen der Außen- oder Innenspiegel oder beliebige weitere Anwendungen möglich.

In der ersten Schalteinrichtung 10 und/oder der zweiten Schalteinrichtung 20 kann darüber hinaus eine Sensorvorrichtung (nicht dargestellt) vorgesehen sein, welche mindestens eine charakteristische elektrische Größe erfasst. Beispielsweise kann ein elektrischer Strom oder eine elektrische Leistungsaufnahme eines elektrischen Verbrauchers 41-44 erfasst werden. Die erfasste elektrische Größe kann gegebenenfalls auch an einem internen oder externen Speicher zwischengespeichert werden. Auf diese Weise können frühere erfasste elektrische Größen mit einer aktuell erfassten elektrischen Größe verglichen werden. Beim Abweichen der aktuellen charakteristischen elektrischen Größe von früheren, gespeicherten Werten oder gegebenenfalls auch vorgegebenen festen Grenzwerten kann gegebenenfalls eine Fehlfunktion oder ähnliches detektiert werden. Im Falle einer solchen detektierten Fehlfunktion kann gegebenenfalls ein Alarm ausgelöst und/oder der angeschlossene elektrische Verbraucher 41-44 kann deaktiviert bzw. abgeschaltet werden. Insbesondere können zum Abschalten bzw. Deaktivieren des jeweiligen elektrischen Verbrauchers gleichzeitig sowohl die Schaltelemente 11 in der ersten Schalteinrichtung 10 als auch Schaltelemente 21 in der zweiten Schalteinrichtung 20 geöffnet werden. Auf diese Weise kann sichergestellt werden, dass eine elektrische Energieversorgung selbst dann unterbrochen wird, wenn in der ersten Schalteinrichtung 10 oder der zweiten Schalteinrichtung 20 eine Fehlfunktion auftreten würde.

Zur Ansteuerung der Schaltelemente 11 in der ersten Schalteinrichtung 10 und/oder der Schaltelemente 21 in der zweiten Schalteinrichtung 20 können die jeweiligen Schalteinrichtungen 10, 20 über eine Datenverbindung mit einer zentralen Steuereinrichtung (nicht dargestellt) verbunden werden. Insbesondere kann über diese Datenverbindung auch die gegebenenfalls erfassten charakteristischen Größen an die zentrale Steuereinrichtung weitergeleitet werden.

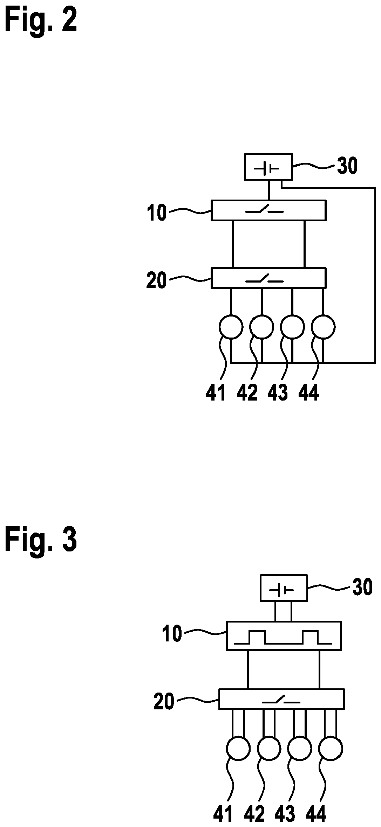

Figur 2 zeigt eine schematische Darstellung eines Blockschaltbilds einer Vorrichtung 1 zum Ansteuern elektrischer Verbraucher 41 bis 44 gemäß einer weiteren Ausführungsform. Die Ausführungsform gemäß Figur 2 unterscheidet sich von der zuvor beschriebenen Ausführungsform lediglich darin, dass in der Ausführungsform gemäß Figur 2 nur ein Leiter der elektrischen Energiequelle 30 über die erste Schalteinrichtung 10 und die zweite Schalteinrichtung 20 geschaltet wird. Der andere Leiter der elektrischen Energiequelle 30 ist über eine zentrale Massenverbindung direkt mit den elektrischen Verbrauchern 41 bis 44 verbunden.

Figur 3 zeigt eine schematische Darstellung eines Blockschaltbilds einer Vorrichtung 1 zum Ansteuern elektrischer Verbraucher 41 bis 44 gemäß einer weiteren Ausführungsform. Die Ausführungsform gemäß Figur 3 unterscheidet sich von den zuvor beschriebenen Ausführungsformen insbesondere dadurch, dass die erste Schalteinrichtung 10 die Steuersignale zum Ansteuern der elektrischen Verbraucher, insbesondere angeschlossener elektrischer Motoren 41 bis 44 generiert. Beispielsweise können hierzu pulsbreitenmodulierte Spannungs- oder Stromimpulse bereitgestellt werden. Insbesondere können hierzu zum Beispiel die Schaltelemente 11 der ersten Schalteinrichtung basierend auf einem pulsbreitenmodulierten Steuersignal angesteuert werden. Die von der ersten Schalteinrichtung 10 bereitgestellten elektrischen Spannungen bzw. Ströme werden an der zweiten Schalteinrichtung 20 bereitgestellt. Die zweite Schalteinrichtung 20 kann daraufhin die bereitgestellten Spannungs- oder Stromsignale an einem oder mehreren angeschlossenen elektrischen Verbrauchern 41 bis 44, insbesondere angeschlossenen elektrischen Motoren bereitstellen. Auf diese Weise ist es beispielsweise möglich, in der ersten Schalteinrichtung 10 eine zentrale Erzeugung der Ansteuersignale für elektrische Motoren vorzusehen, und die von der ersten Schalteinrichtung 10 bereitgestellten Signale mittels der zweiten Schalteinrichtung 20 an einem jeweils anzusteuernden Motor 41 bis 44 bereitzustellen. Auf diese Weise kann insbesondere eine separate Steuerschaltung für jeden einzelnen Motor 41 bis 44 entfallen.

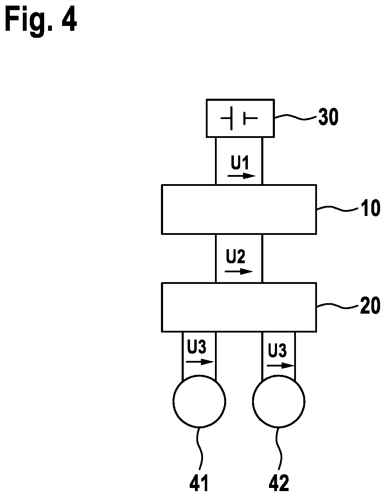

Figur 4 zeigt eine schematische Darstellung eines Blockschaltbilds gemäß einer weiteren Ausführungsform einer Vorrichtung 1 zum Ansteuern elektrischer Verbraucher 41 bis 44. Die Ausführungsform gemäß Figur 4 unterscheidet sich von der zuvor beschriebenen Ausführungsform insbesondere dadurch, dass die erste Schalteinrichtung 10 und/oder die zweite Schalteinrichtung 20 als Spannungswandler ausgeführt werden kann. Insbesondere können die erste Schalteinrichtung 10 und/oder die zweite Schalteinrichtung 20 einen Gleichspannungswandler, vorzugsweise einen Tiefsetzsteller (stepdown converter) umfassen. Hierzu können gegebenenfalls in der ersten Schalteinrichtung 10 und/oder der zweiten Schalteinrichtung 20 weitere Bauelemente, wie zum Beispiel Induktivitäten, Spannungsteiler, Transistoren oder ähnliches, vorgesehen sein. Durch entsprechendes Takten der Schaltelemente 11 bzw. 21 in der ersten Schalteinrichtung 10 bzw. der zweiten Schalteinrichtung 20 kann die von der elektrischen Energiequelle 30 bereitgestellte elektrische Spannung in eine niedrigere Spannung konvertiert werden. Auf diese Weise können auch bei einem Bordnetz mit einer höheren Spannung jeweils elektrische Verbraucher mit einer niedrigeren Eingangsspannung versorgt werden. Beispielsweise kann am Eingangsanschluss 10a der ersten Schalteinrichtung 10 eine erste Spannung U1 (beispielsweise 48 Volt) bereitgestellt werden. Die erste Schalteinrichtung 10 konvertiert diese Spannung in eine niedrigere Spannung U2 (beispielsweise 24 Volt). Diese niedrigere Spannung U2 kann direkt oder gegebenenfalls auch über eine weitere Schalteinrichtung an einem oder mehreren Verbrauchern bereitgestellt werden. Weiterhin kann gegebenenfalls die Ausgangsspannung U2 der ersten Schalteinrichtung mittels der zweiten Schalteinrichtung 20 in eine weitere, niedrigere Spannung U3 konvertiert werden (beispielsweise 12 Volt). Auch diese niedrigere Spannung U3 kann direkt oder indirekt über eine weitere Schalteinrichtung an einem oder mehreren elektrischen Verbrauchern bereitgestellt werden.

Die vorliegende Erfindung wurde im Voraufgegangenen basierend auf zwei hierarchisch angeordneten Schalteinrichtungen 10, 20 beschrieben. Darüber hinaus sind grundsätzlich jedoch auch hierarchische Strukturen mit mehr als zwei Schalteinrichtungen, beispielsweise drei oder mehr hierarchisch angeordneten Schalteinrichtungen möglich.

Es versteht sich, dass die zuvor beschriebenen Konfigurationen von Schalteinrichtungen als Multiplexer, Spannungswandler und Treiber für Elektromotoren auch beliebig miteinander kombiniert werden können. Ferner kann neben den zuvor beschriebenen Anwendungen mit einer Gleichspannungsquelle 30 auch alternativ eine Wechselspannungsquelle am Eingang der ersten Schalteinrichtung 10 realisiert werden.

Zusammenfassend betrifft die vorliegende Erfindung eine Vorrichtung zum Ansteuern von elektrischen Verbrauchern in einem Fahrzeug entsprechend dem Anspruch 1. Hierzu sind mehrere hierarchisch angeordnete Schalteinrichtungen vorgesehen. Die einzelnen Schalteinrichtungen können beispielsweise als Multiplexer, Spannungswandler oder Treiberstufen für Elektromotoren ausgeführt werden. Die hierarchische Anordnung mehrerer Schalteinrichtungen zwischen einer elektrischen Energiequelle und den Verbrauchern ermöglicht auch dann ein zuverlässiges Abschalten elektrischer Verbraucher, selbst wenn in einem der Schalteinrichtungen ein Fehler auftritt.

## Patentansprüche

1. Vorrichtung (1) zum Ansteuern eines elektrischen Verbrauchers (41 - 44) in einem Fahrzeug-Bordnetz, mit:
einer ersten Schalteinrichtung (10), mit einem Eingangsanschluss (10a) und einer ersten Anzahl von Ausgangsanschlüssen (10b); und
einer zweiten Schalteinrichtung (20), mit einer zweiten Anzahl von Eingangsanschlüssen (20a) und einer dritten Anzahl von Ausgangsanschlüssen (20b),
wobei der Eingangsanschluss (10a) der ersten Schalteinrichtung (10) dazu ausgelegt ist, mit einer elektrischen Energiequelle gekoppelt zu werden, und
die erste Schalteinrichtung (10) mehrere erste Schaltelemente (11) umfasst, die zwischen dem Eingangsanschluss (10a) und jeweils einem Ausgangsanschluss (10b) der ersten Schalteinrichtung (14) angeordnet sind; und
wobei mindestens ein Ausgangsanschluss (10b) der ersten Schalteinrichtung (10) mit einem Eingangsanschluss (20a) der zweiten Schalteinrichtung (20) elektrisch gekoppelt ist,
die zweite Schalteinrichtung (20) mehrere zweite Schaltelemente (41) umfasst,
die jeweils zwischen einem Eingangsanschluss (20a) und einem Ausgangsanschluss (20b) der zweiten Schalteinrichtung (20) angeordnet sind, und
die Ausgangsanschlüsse (20b) der zweiten Schalteinrichtung (20) dazu ausgelegt sind, jeweils mit einem elektrischen Verbraucher (41 - 44) gekoppelt zu werden
**dadurch gekennzeichnet, dass**
die erste Schalteinrichtung (10) und/oder die zweite Schalteinrichtung (20) eine Sensoreinrichtung und einen Speicher umfasst, wobei die Sensoreinrichtung dazu ausgelegt ist, eine charakteristische elektrische Größe eines angeschlossenen elektrischen Verbrauchers (41 - 44) zu erfassen, in dem Speicher zu speichern und frühere erfasste charakteristische Größen mit aktuellen erfassten charakteristischen Größen zu vergleichen.

2. Vorrichtung (1) nach Anspruch 1, wobei die erste Schalteinrichtung (10) und/oder die zweite Schalteinrichtung (20) dazu ausgelegt sind, einen Eingangsanschluss (10a, 20a) jeweils abwechselnd mit einem Ausgangsanschluss(10b, 20b) einer Gruppe von mehreren Ausgangsanschlüssen elektrisch zu koppeln.

3. Vorrichtung (1) nach Anspruch 1, wobei die erste Schalteinrichtung (10) und/oder die zweite Schalteinrichtung (20) dazu ausgelegt sind, einen Eingangsanschluss (10a, 20a) gleichzeitig mit mehreren Ausgangsanschlüssen (10b, 20b) elektrisch zu koppeln.

4. Vorrichtung (1) nach einem der vorstehenden Ansprüche, wobei jeder Eingangsanschluss (20a) der zweiten Schalteinrichtung (20) mit einem Ausgangsanschluss (10b) der ersten Schalteinrichtung (10) elektrisch gekoppelt ist.

5. Vorrichtung (1) nach einem der vorstehenden Ansprüche, wobei die erste Schalteinrichtung (10) oder die zweite Schalteinrichtung (20) einen Gleichspannungswandler umfasst.

6. Vorrichtung (1) nach einem der vorstehenden Ansprüche, wobei die erste Schalteinrichtung (10) eine Steuerschaltung für einen Elektromotor umfasst.

7. Vorrichtung (1) nach einem der vorstehenden Ansprüche, wobei die erste Schalteinrichtung (10) und die zweite Schalteinrichtung (20) jeweils dazu ausgelegt sind, einen Hinleiter und einen Rückleiter der Energiequelle (30) zu den elektrischen Verbrauchern (41- 44) zu schalten.

8. Vorrichtung (1) nach einem der Ansprüche 1 bis 7, wobei die erste Schalteinrichtung (10) und die zweite Schalteinrichtung (20) jeweils dazu ausgelegt sind, einen Leiter der Energiequelle (30) zu den elektrischen Verbrauchern (41 - 44) zu schalten,
und wobei die Vorrichtung (1) eine gemeinsame Massenrückführung umfasst.

9. Bordnetz eines Fahrzeugs, mit:
einer Vorrichtung (1) nach einem der Ansprüche 1 bis 8;
einer elektrischen Energiequelle (30), die mit dem Eingangsanschluss (10a) der ersten Schalteinrichtung (10) elektrisch gekoppelt ist, und
mehreren elektrischen Verbrauchern (41 - 4), die jeweils mit einem Ausgangsanschluss (20b) der zweiten Schalteinrichtung (20) elektrisch gekoppelt sind.

## Claims

1. Device (1) for actuating an electrical load (41-44) in a vehicle on-board electrical system, having:
a first switching apparatus (10) having an input connection (10a) and a first number of output connections (10b), and
a second switching apparatus (20) having a second number of input connections (20a) and a third number of output connections (20b),
wherein the input connection (10a) of the first switching apparatus (10) is designed to be coupled to an electrical energy source, and the first switching apparatus (10) comprises a plurality of first switching elements (11) that are arranged between the input connection (10a) and in each case one output connection (10b) of the first switching apparatus (14), and
wherein at least one output connection (10b) of the first switching apparatus (10) is electrically coupled to an input connection (20a) of the second switching apparatus (20),
the second switching apparatus (20) comprises a plurality of second switching elements (41) that are each arranged between an input connection (20a) and an output connection (20b) of the second switching apparatus (20), and
the output connections (20b) of the second switching apparatus (20) are designed to each be coupled to an electrical load (41-44),
**characterized in that**
the first switching apparatus (10) and/or the second switching apparatus (20) comprise/comprises a sensor apparatus and a storage unit, wherein the sensor apparatus is designed to capture a characteristic electrical variable of a connected electrical load (41-44) to store same in the storage unit and to compare previously captured characteristic variables with present captured characteristic variables.

2. Device (1) according to Claim 1, wherein the first switching apparatus (10) and/or the second switching apparatus (20) are/is designed to electrically couple an input connection (10a, 20a) in each case alternately to an output connection (10b, 20b) of a group of a plurality of output connections.

3. Device (1) according to Claim 1, wherein the first switching apparatus (10) and/or the second switching apparatus (20) are/is designed to electrically couple an input connection (10a, 20a) simultaneously to a plurality of output connections (10b, 20b).

4. Device (1) according to one of the preceding claims, wherein each input connection (20a) of the second switching apparatus (20) is electrically coupled to an output connection (10b) of the first switching apparatus (10) .

5. Device (1) according to one of the preceding claims, wherein the first switching apparatus (10) or the second switching apparatus (20) comprises a DC-DC converter.

6. Device (1) according to one of the preceding claims, wherein the first switching apparatus (10) comprises a control circuit for an electric motor.

7. Device (1) according to one of the preceding claims, wherein the first switching apparatus (10) and the second switching apparatus (20) are each designed to connect a forward conductor and a return conductor of the energy source (30) to the electrical loads (41-44).

8. Device (1) according to one of Claims 1 to 7, wherein the first switching apparatus (10) and the second switching apparatus (20) are each designed to connect a conductor of the energy source (30) to the electrical loads (41-44),
and wherein the device (1) comprises a common earth return.

9. On-board electrical system for a vehicle, having:
a device (1) according to one of Claims 1 to 8,
an electrical energy source (30) that is electrically coupled to the input connection (10a) of the first switching apparatus (10), and
a plurality of electrical loads (41-44) that are each electrically coupled to an output connection (20b) of the second switching apparatus (20).

## Revendications

1. Dispositif (1) permettant de piloter un consommateur électrique (41 à 44) dans un réseau embarqué de véhicule, comprenant :
un premier moyen de commutation (10) pourvu d'une borne d'entrée (10a) et d'un premier nombre de bornes de sortie (10b) ; et
un deuxième moyen de commutation (20) pourvu d'un deuxième nombre de bornes d'entrée (20a) et d'un troisième nombre de bornes de sortie (20b),
la borne d'entrée (10a) du premier moyen de commutation (10) étant conçue pour être couplée à une source d'énergie électrique, et le premier moyen de commutation (10) comprenant plusieurs premiers éléments de commutation (11) qui sont disposés entre la borne d'entrée (10a) et respectivement une borne de sortie (10b) du premier moyen de commutation (14) ; et
dans lequel au moins une borne de sortie (10b) du premier moyen de commutation (10) est couplée électriquement à une borne d'entrée (20a) du deuxième moyen de commutation (20),
le deuxième moyen de commutation (20) comprend plusieurs deuxièmes éléments de commutation (41) qui sont respectivement disposés entre une borne d'entrée (20a) et une borne de sortie (20b) du deuxième moyen de commutation (20), et
les bornes de sortie (20b) du deuxième moyen de commutation (20) sont conçues pour être couplées respectivement à un consommateur électrique (41 à 44),
**caractérisé en ce que** le premier moyen de commutation (10) et/ou le deuxième moyen de commutation (20) comprend/comprennent un moyen détecteur et une mémoire, le moyen détecteur étant conçu pour détecter une grandeur électrique caractéristique d'un consommateur électrique (41 à 44) connecté, pour les stocker dans la mémoire, et pour comparer des grandeurs caractéristiques détectées antérieures avec des grandeurs caractéristiques détectées actuelles.

2. Dispositif (1) selon la revendication 1, dans lequel le premier moyen de commutation (10) et/ou le deuxième moyen de commutation (20) est/sont conçu(s) pour coupler électriquement une borne d'entrée (10a, 20a) respectivement en alternance à une borne de sortie (10b, 20b) d'un groupe de plusieurs bornes de sortie.

3. Dispositif (1) selon la revendication 1, dans lequel le premier moyen de commutation (10) et/ou le deuxième moyen de commutation (20) est/sont conçu(s) pour coupler électriquement une borne d'entrée (10a, 20a) en même temps à plusieurs bornes de sortie (10b, 20b) .

4. Dispositif (1) selon l'une quelconque des revendications précédentes, dans lequel chaque borne d'entrée (20a) du deuxième moyen de commutation (20) est couplée électriquement à une borne de sortie (10b) du premier moyen de commutation (10).

5. Dispositif (1) selon l'une quelconque des revendications précédentes, dans lequel le premier moyen de commutation (10) ou le deuxième moyen de commutation (20) comprend un convertisseur continu-continu.

6. Dispositif (1) selon l'une quelconque des revendications précédentes, dans lequel le premier moyen de commutation (10) comprend un circuit de commande pour un moteur électrique.

7. Dispositif (1) selon l'une quelconque des revendications précédentes, dans lequel le premier moyen de commutation (10) et le deuxième moyen de commutation (20) sont respectivement conçus pour commuter un conducteur d'arrivée et un conducteur de retour de la source d'énergie (30) sur les consommateurs électriques (41 à 44).

8. Dispositif (1) selon l'une quelconque des revendications 1 à 7, dans lequel le premier moyen de commutation (10) et le deuxième moyen de commutation (20) sont conçus respectivement pour commuter un conducteur de la source d'énergie (30) sur les consommateurs électriques (41 à 44),
et dans lequel le dispositif (1) comprend un retour de masse commun.

9. Réseau embarqué d'un véhicule, comprenant :
un dispositif (1) selon l'une quelconque des revendications 1 à 8 ;
une source d'énergie électrique (30) qui est couplée électriquement à la borne d'entrée (10a) du premier moyen de commutation (10), et
plusieurs consommateurs électriques (41 à 44) qui sont couplés électriquement respectivement à une borne de sortie (20b) du deuxième moyen de commutation (20).
